Europäisches Patentamt

European Patent Office

Office européen des brevets

(19)

(11) Numéro de publication : **0 025 972**
**B1**

(12)

# FASCICULE DE BREVET EUROPÉEN

(45) Date de publication du fascicule du brevet :
**11.05.83**

(21) Numéro de dépôt : **80105564.1**

(22) Date de dépôt : **17.09.80**

(51) Int. Cl.³ : **A 47 J 42/56**, A 47 J 43/046

(54) **Appareil électroménager de traitement des aliments.**

(30) Priorité : **21.09.79 FR 7923558**

(43) Date de publication de la demande :
**01.04.81 Bulletin 81/13**

(45) Mention de la délivrance du brevet :
**11.05.83 Bulletin 83/19**

(84) Etats contractants désignés :
**AT BE CH DE IT LI NL SE**

(56) Documents cités :
**FR A 2 128 494**
**FR A 2 384 476**
**NL C 110 380**

(73) Titulaire : **MOULINEX S.A.**
**7 à 15, rue Jules-Ferry**
**F-93170 Bagnolet (FR)**

(72) Inventeur : **Amlot, Jacques Henri Julien**
**35, avenue de Courteille**
**F-61000 Alençon (FR)**

(74) Mandataire : **May, Hans Ulrich**
**Thierschstrasse 27**
**D-8000 München 22 (DE)**

Jouve, 18, rue St-Denis, 75001 Paris, France

Appareil électroménager de traitement des aliments

L'invention se rapporte aux appareils électroménagers de traitement des aliments, comportant un socle supportant un bol de travail coiffé par un couvercle amovible, un groupe moteur qui est agencé dans ledit socle et dont l'arbre de sortie porte un outil de travail interne audit bol, et un interrupteur commandant ledit groupe moteur et actionné au moyen d'un poussoir qui est manœuvré par l'usager et qui est monté mobile à cet effet dans un bossage du socle adjacent audit bol entre une position de repos et une position d'enclenchement de l'interrupteur.

L'invention concerne, plus précisément, les appareils de ce genre qui sont équipés d'un verrou de sécurité monté mobile dans le bossage adjacent au bol entre une position d'arrêt pour laquelle ce verrou maintient le poussoir en position de repos et vers laquelle il est sollicité par un moyen de rappel, et une position de fonctionnement pour laquelle il libère le poussoir et en laquelle il est amené à l'encontre dudit moyen de rappel par une patte dirigée horizontalement qui est solidaire du couvercle et qui, lorsque le couvercle est amené en sa position de fermeture, vient en prise avec une touche de manœuvre de ce verrou à travers une fente pratiquée dans la paroi latérale dudit bossage.

On comprendra que cette disposition a pour effet d'assurer que l'enclenchement de l'interrupteur ne peut pas s'effectuer tant que le couvercle n'est pas correctement fixé sur le bol.

Le brevet néerlandais NLA 110 380 décrit un appareil électroménager de ce genre à verrou de sécurité. Dans cet appareil cependant, le poussoir est monté déplaçable horizontalement sur le bossage, de sorte que la manœuvre de ce poussoir tend à provoquer un déplacement du socle de l'appareil sur la table ou autre plan de travail où il est posé, ce qui oblige l'usager à le retenir d'une main pour l'immobiliser tandis que de l'autre main il manœuvre le poussoir. Ceci constitue évidemment un inconvénient lorsque l'usager doit introduire, de temps à autre, dans le bol, à travers une ouverture appropriée du couvercle, des aliments à traiter.

L'invention a notamment pour but de supprimer tout risque de déplacement de l'appareil lors de l'enclenchement de l'interrupteur, ceci en équipant l'appareil d'un poussoir monté coulissant verticalement dans le bossage entre sa position de repos et sa position d'enclenchement, et d'adjoindre à un tel poussoir un verrou de sécurité approprié.

Selon la présente invention, le couvercle étant du type à fermeture par rotation, par exemple du genre baïonnette, le verrou de sécurité est monté pivotant autour d'un axe horizontal situé sensiblement dans un plan radial à ce couvercle et présente un épaulement qui, pour la position d'arrêt de ce verrou, est placé sous un doigt descendant solidaire du poussoir et maintient ainsi ce poussoir en position haute de repos

tandis que, pour la position de fonctionnement, il libère ce poussoir pour le laisser descendre vers sa position basse d'enclenchement.

Les caractéristiques et avantages de l'invention ressortiront d'ailleurs de la description qui va suivre, à titre d'exemple, en référence aux dessins annexés dans lesquels :

la figure 1 est une coupe verticale d'un appareil de traitement des aliments, par exemple un hachoir, réalisé selon l'invention ;

la figure 2 est une vue de dessus du couvercle destiné à fermer le bol de travail de cet appareil ;

la figure 3 est une coupe verticale de ce couvercle selon la ligne III-III de la figure 2 ;

la figure 4 représente, à plus grande échelle, le bossage du socle dans lequel est agencé le poussoir de commande, vu en élévation selon la flèche IV de la figure 1, et après enlèvement du bol et du couvercle ;

la figure 5 est une coupe verticale partielle de ce bossage illustrant le poussoir en sa position de repos et le verrou de sécurité en la position d'arrêt qu'il occupe en l'absence du couvercle ;

la figure 6 est une vue analogue à la figure 5 mais illustrant en traits pleins le verrou en sa position de fonctionnement et le poussoir en sa position de repos, et en traits interrompus le poussoir en sa position d'enclenchement ;

la figure 7 est une vue de dessus du hachoir avec le couvercle en position de fermeture et montrant, après enlèvement d'un capot porté par le sommet du bossage, le verrou de sécurité ainsi qu'un loquet auxiliaire destiné notamment au maintien occasionnel du poussoir en position d'enclenchement continu ;

la figure 8 représente, en élévation, ce loquet lorsqu'il est en prise avec un mentonnet porté par le poussoir.

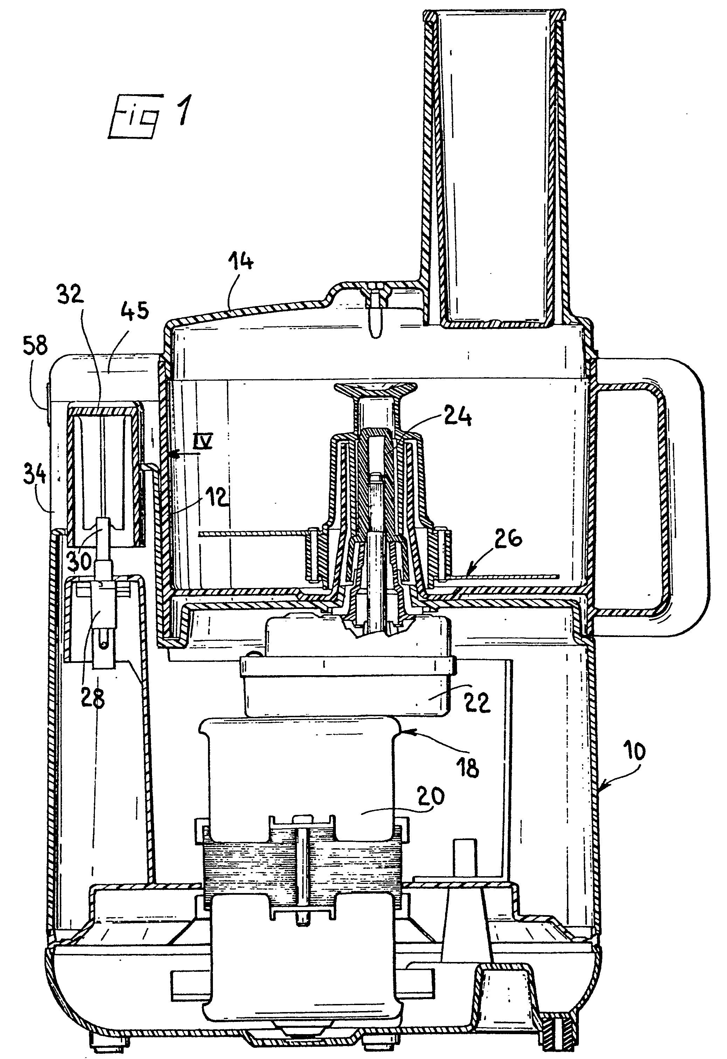

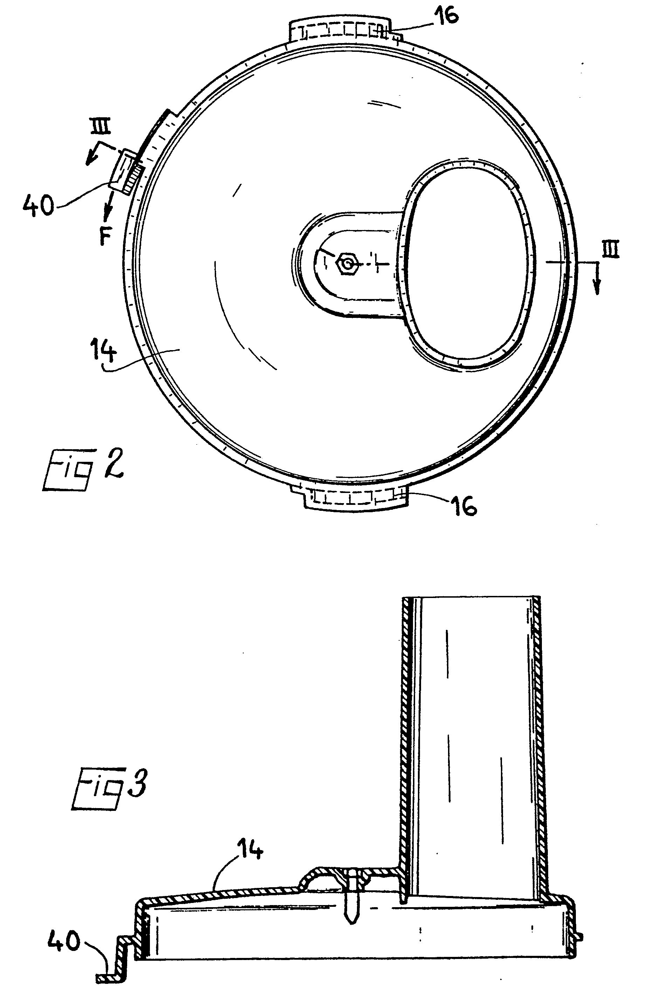

Le hachoir représenté à la figure 1 comporte un socle 10 supportant un bol de travail 12 coiffé par un couvercle amovible 14 qui est amené en position de fermeture sur ce bol par un dispositif de fixation par rotation (flèche F de la figure 2) du genre baïonnette tel qu'indiqué en 16. Dans le socle 10 est agencé un groupe moteur 18 comprenant un moteur électrique 20 suivi d'un réducteur de vitesse 22 dont l'arbre de sortie 24 porte un couperet de travail 26 interne au bol 12.

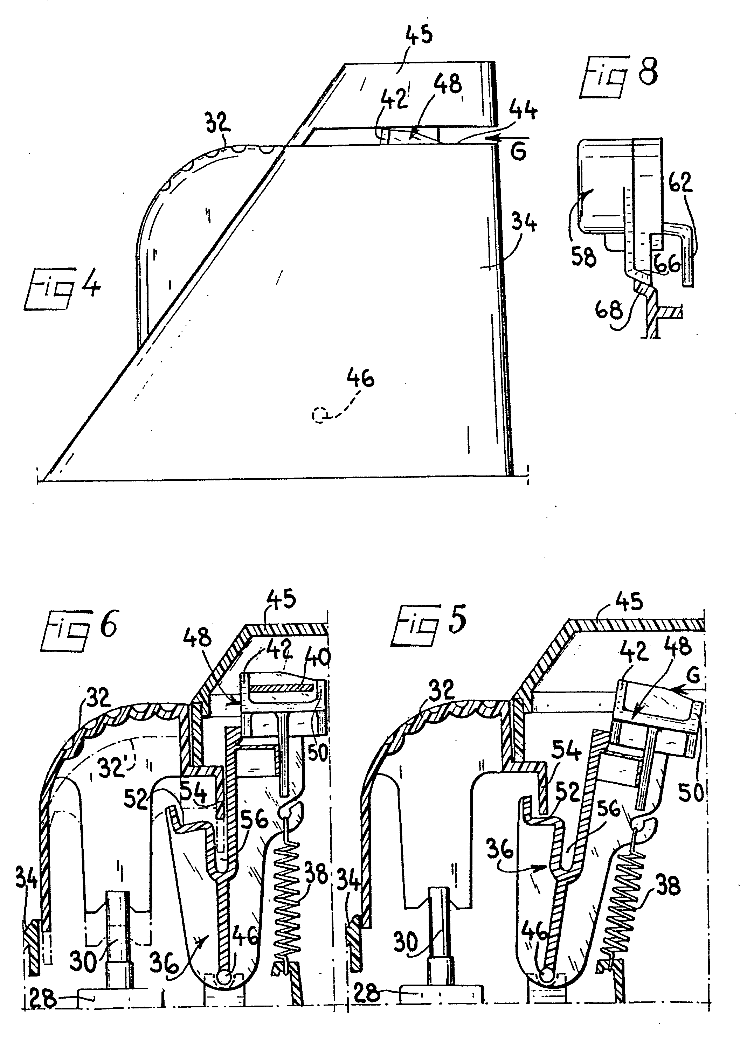

Le moteur 20 est commandé par un interrupteur 28 comportant une tige d'actionnement 30 dirigée verticalement et rappelée vers le haut par des moyens élastiques (non représentés) internes à l'interrupteur. Cette tige 30 est actionnée au moyen d'un poussoir 32 qui est manœuvré par l'usager et qui est à cet effet monté coulissant verticalement dans un bossage 34 du socle 10 adjacent au bol 12 entre une position de repos (traits pleins des figures 5 et 6) et une position d'enclenchement de l'interrupteur (traits interrompus 32' de la figure 6). Ce poussoir 32 est sollicité élastiquement vers sa position haute de repos par la tige 30 de l'interrupteur.

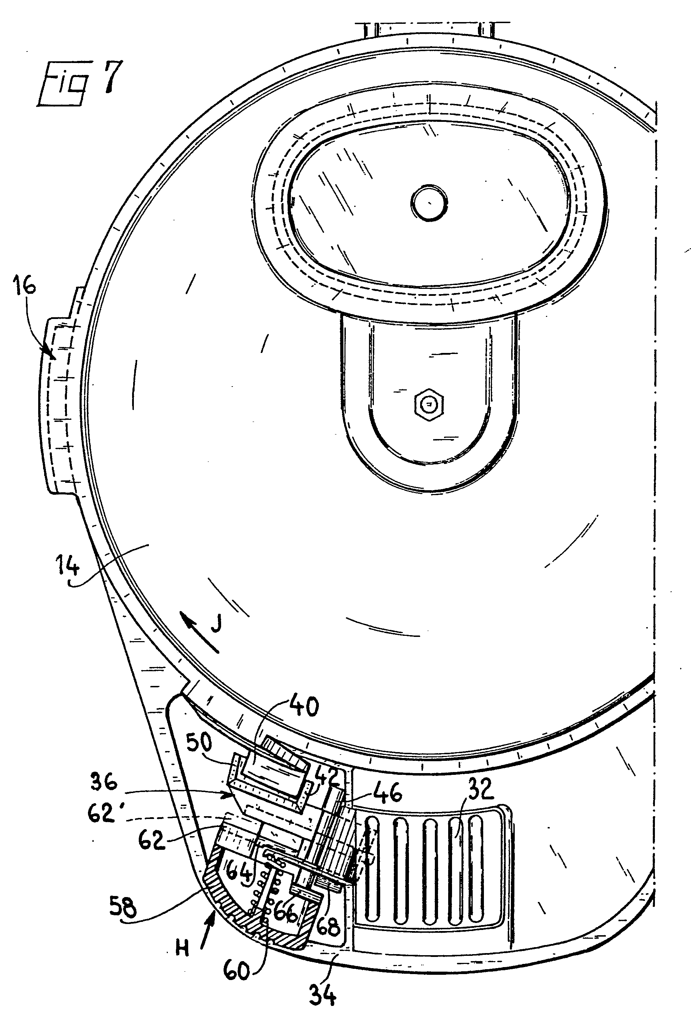

Selon la présente invention, l'appareil est équipé d'un verrou de sécurité 36 monté mobile dans le bossage 34 entre une position d'arrêt (fig. 5), pour laquelle il maintient le poussoir 32 en position de repos et vers laquelle il est sollicité par un ressort 38, et une position de fonctionnement (fig. 6 et 7), pour laquelle il libère le poussoir 32 et en laquelle il est amené à l'encontre du ressort 38 par une patte horizontale 40 qui est solidaire du couvercle 14 et qui, lorsque le couvercle est amené en sa position de fermeture (figures 6 et 7) vient en prise avec une touche 42 de manœuvre de ce verrou à travers une fente 44 dirigée horizontalement (figure 4) ménagée dans la paroi latérale du bossage 34 sous un capot 45 porté par le sommet de ce bossage.

Comme on le voit sur les figures 5 à 7, le verrou 36 est monté pivotant autour d'un axe horizontal 46 situé sensiblement dans un plan radial au couvercle 14, et présente un prolongement 48 en forme de fourchette qui fait saillie partiellement dans la fente 44 et qui comporte deux dents disposées l'une derrière l'autre sur le trajet parcouru par la patte 40 du couvercle 14 lors du mouvement de fermeture (flèche G de la figure 5). La dent antérieure de cette fourchette constitue la touche 42 de manœuvre du verrou, tandis que la dent postérieure constitue un ergot 50 d'emprisonnement de la patte 40 : à cet effet, lorsque le verrou 36 est dans sa position de fonctionnement (fig. 6), cet ergot vient faire saillie dans la fente 44 derrière le bord postérieur de la patte 40, venant ainsi en prise avec cette patte pour l'empêcher de sortir de cette fente, c'est-à-dire pour empêcher l'ouverture du couvercle.

Le verrou 36 présente, d'une part, un épaulement 52 qui, pour la position d'arrêt (fig. 5), est placé sous un doigt descendant 54 du poussoir 32 et maintient ainsi ce poussoir en position haute de repos, et d'autre part, un logement 56 qui est adjacent à l'épaulement 52 et qui, pour la position de fonctionnement (fig. 6), est placé sous le doigt 54 et reçoit ce doigt lorsque le poussoir 32 passe à sa position basse d'enclenchement (traits interrompus de la figure 6) : le doigt 54 vient ainsi automatiquement en prise avec le verrou pour l'immobiliser dès que l'interrupteur 28 est enclenché.

L'appareil est en outre équipé d'un loquet auxiliaire 58 (fig. 7 et 8) monté coulissant horizontalement dans le bossage 34 entre une position d'extension (traits pleins de la figure 7) pour laquelle il maintient le verrou 36 en sa position de fonctionnement et vers laquelle il est sollicité par un ressort 60, et une position de retrait en laquelle il peut être amené à l'encontre de ce ressort (flèche H de la figure 7) et pour laquelle il libère le verrou 36 et l'autorise à passer à sa position d'arrêt si du moins ce verrou n'est pas alors immobilisé par le doigt 54, c'est-à-dire si le poussoir 32 est en sa position de repos. Le loquet 58 maintient le verrou 36 au moyen d'une butée verticale 62 dirigée vers le bas (fig. 7 et 8) qui, en la position d'extension du loquet, vient en prise avec une ailette 64 du verrou disposée dans un plan vertical perpendiculaire à l'axe de pivotement 46, et qui, en la position de retrait du loquet vient se placer en la position 62' (indiquée en traits interrompus sur la figure 7) pour laquelle l'ailette 64 est libérée. Le loquet 58 présente en outre un prolongement descendant 66 (voir notamment figure 8) adapté à s'accrocher sur un mentonnet 68 porté par le poussoir 32 lorsque ce poussoir est en sa position basse et lorsque le loquet est en sa position de retrait.

Lorsque le couvercle de l'appareil est enlevé, le loquet 58 est en sa position de retrait (position 62' de la figure 7), le verrou 36 est en sa position d'arrêt (fig. 5), et le poussoir 32 est par suite maintenu en sa position haute de repos.

Lorsque l'on ferme le couvercle 14 (flèche F de la figure 2) en vue de l'utilisation de l'appareil, la patte 40 vient s'engager dans la fente 44 (flèche G des figures 4 et 5), vient en prise avec la touche 42, et fait ainsi pivoter le verrou 36 vers sa position de fonctionnement (fig. 6 et 7) à l'encontre du ressort 38. A la fin de ce mouvement, l'ailette 64 libère la butée 62 du loquet 58, lequel, sous l'effet du ressort 60, passe à sa position d'extension pour laquelle la butée 62 est alors en prise avec l'ailette 64 pour immobiliser le verrou 36 en sa position de fonctionnement. A ce moment, la patte 40 est emprisonnée dans la fente 44 par l'ergot 50, interdisant alors l'ouverture directe du couvercle.

Pour faire alors fonctionner l'appareil, l'usager appuie sur le poussoir 32 (traits interrompus 32' de la figure 6), ce qui entraîne, d'une part, l'abaissement de la tige 30 et donc l'enclenchement de l'interrupteur 28, et, d'autre part, l'engagement du doigt 54 dans le logement 56.

Si l'usager relâche alors le poussoir, celui-ci remonte automatiquement vers sa position de repos sous l'effet de rappel exercé par la tige 30 de l'interrupteur 28.

Pour pouvoir ensuite ouvrir le couvercle 14, l'usager doit exercer une pression sur le loquet 58 (flèche H de la figure 7) pour amener la butée 62 en la position d'escamotage 62' et libérer ainsi le verrou 36, et doit en même temps faire tourner le couvercle dans le sens de la flèche J. Le verrou retourne alors, pendant ce mouvement d'ouverture du couvercle, vers sa position d'arrêt de la figure 5.

Dans le cas où l'usager désire conserver l'appareil en fonctionnement sans obligation d'exercer lui-même une pression sur le poussoir 32, il peut, alors que ce poussoir a été d'abord abaissé, amener le loquet 58 en position de retrait et l'y maintenir tandis qu'il relâche le poussoir. Le poussoir remonte alors légèrement jusqu'à ce que son mentonnet 68 vienne en prise avec le prolongement 66 du loquet (fig. 8). Lorsque l'usager relâche le loquet, celui-ci demeure accroché en sa position de retrait, le poussoir demeure accroché en sa position basse d'enclenchement, et le verrou demeure en sa position de fonctionnement puisqu'il y est maintenu par l'effet du doigt d'immobilisation 54.

Pour interrompre ensuite l'enclenchement, il suffit de donner au poussoir une brève impulsion vers le bas : le loquet retourne aussitôt vers sa position d'extension, et le poussoir remonte vers sa position de repos. Le verrou 36 est maintenu encore en position de fonctionnement par la butée 62 jusqu'à ce que l'usager appuie sur le loquet en vue de l'ouverture du couvercle comme expliqué précédemment.

### Revendications

1. Appareil électroménager de traitement des aliments comportant un socle (10) supportant un bol de travail (12) coiffé par un couvercle amovible (14), un groupe moteur (18) qui est agencé dans ledit socle et dont l'arbre de sortie (24) porte un outil de travail (26) interne audit bol, un interrupteur (28) commandant ledit groupe moteur et actionné au moyen d'un poussoir (32) qui est manœuvré par l'usager et qui est monté mobile à cet effet dans un bossage (34) du socle adjacent audit bol entre une position de repos et une position d'enclenchement de l'interrupteur (28), ainsi qu'un verrou de sécurité (36) monté mobile dans le bossage (34) entre une position d'arrêt pour laquelle il maintient le poussoir (32) en position de repos et vers laquelle il est sollicité par un moyen de rappel (38), et une position de fonctionnement pour laquelle il libère le poussoir (32) et en laquelle il est amené à l'encontre dudit moyen de rappel par une patte (40) dirigée horizontalement qui est solidaire du couvercle (14) et qui, lorsque le couvercle est amené en sa position de fermeture, vient en prise avec une touche (42) de manœuvre de ce verrou à travers une fente (44) pratiquée dans la paroi latérale dudit bossage (34), caractérisé en ce que, le couvercle (14) étant du type à fermeture par rotation, par exemple du genre baïonnette, et le poussoir (32) étant monté coulissant verticalement dans le bossage (34) entre sa position de repos et sa position d'enclenchement, le verrou (36) est monté pivotant autour d'un axe horizontal (46) situé sensiblement dans un plan radial au couvercle (14) et présente un épaulement (52) qui, pour la position d'arrêt de ce verrou, est placé sous un doigt descendant (54) solidaire du poussoir (32) et maintient ainsi ce poussoir en position haute de repos, tandis que, pour la position de fonctionnement, il libère ce poussoir pour le laisser descendre vers sa position basse d'enclenchement.

2. Appareil électroménager selon la revendication 1, caractérisé en ce que, l'appareil comportant des moyens d'immobilisation automatique du verrou (36) en sa position de fonctionnement, ce verrou comporte un ergot (50) d'emprisonnement de la patte (40) du couvercle, qui, lorsque le verrou (36) est en ladite position de fonctionnement, vient en prise avec cette patte lors d'un mouvement du couvercle dans le sens de l'ouverture.

3. Appareil électroménager selon la revendication 2, caractérisé en ce que le verrou (36) présente un prolongement (42) en forme de fourchette qui fait saillie partiellement dans la fente (44) du bossage et qui comporte deux dents (42 et 50) disposées l'une derrière l'autre sur le trajet parcouru par la patte (40) du couvercle lors du mouvement de fermeture, la dent antérieure (42) constituant la touche de manœuvre du verrou, et la dent postérieure (50) constituant l'ergot d'emprisonnement de la patte (40).

4. Appareil électroménager selon la revendication 2 ou la revendication 3, caractérisé en ce que les moyens d'immobilisation automatique du verrou (36) comprennent un logement (56) qui est adjacent à l'épaulement (52) et qui, pour la position de fonctionnement, est placé sous le doigt (54) et reçoit ce doigt lorsque le poussoir passe à sa position basse d'enclenchement.

5. Appareil électroménager selon l'une quelconque des revendications 2 à 4, caractérisé en ce que les moyens d'immobilisation automatique du verrou (36) comprennent en outre un loquet (58) monté mobile dans le bossage (34) entre une position d'extension pour laquelle il maintient le verrou (36) en la position de fonctionnement et vers laquelle il est sollicité par un organe de rappel (60), et une position de retrait en laquelle il peut être amené à l'encontre dudit organe de rappel (60) et pour laquelle il libère le verrou (36) et l'autorise à passer à sa position d'arrêt.

6. Appareil électroménager selon la revendication 5, caractérisé en ce que, le loquet (58) étant monté coulissant horizontalement, ce loquet maintient le verrou (36) au moyen d'une butée verticale (62) qui, en la position d'extension, vient en prise avec une ailette (64) du verrou disposée dans un plan vertical.

7. Appareil électroménager selon la revendication 5 ou la revendication 6, caractérisé en ce que, le poussoir (32) étant soumis à des moyens de rappel élastique (30) qui le sollicitent vers sa position de repos, ce poussoir peut être maintenu en sa position d'enclenchement par le loquet (58) placé en sa position de retrait, ceci en vue d'assurer un enclenchement continu sans action ultérieure de l'usager sur le poussoir.

8. Appareil électroménager selon la revendication 7, caractérisé en ce que le poussoir (32) est maintenu en sa position d'enclenchement par accrochage d'un prolongement (66) du loquet sur un mentonnet (68) porté par le poussoir.

### Claims

1. Electric household food processor comprising a base (10) supporting a bowl (12) covered by a removable cover (14), a drive unit (18) whose output shaft (24) within the bowl carries a working member (26), a switch (28) for controlling the drive unit and being actuated by means of a push button (32) operated by the user and to this end being movably held between an OFF position and an ON position of the switch (28) within a projection (34) of the base which is adjacent the bowl, and comprising a safety catch (36) which is held within the projection (34) so as to be movable between an inactive position, in which it retains the push button (32) in the rest position and into which it is urged by a return element (38), and an operative position in which it releases the push button (32) and into which it is brought against the action of the return element by means of a horizontally extending foot (40), which is fixedly joined to the cover (14) and which — when the cover is moved into its closed position — is brought into engagement with an actuating key (42) through a slot (44) formed in the sidewall of the projection (34), characterized in that the cover (14) is of the turning lock type, e. g. of the bayonet lock type, and the push button (32) is retained within the projection (34) so as to be vertically movable between its rest position and its active position, that the catch (36) is held so as to be pivotable about a horizontal axis (46) extending substantially in a plane radial relative to the cover (14) and is formed with a shoulder (52) which for the inactive position of said catch is beneath a depending finger (54) fixedly joined to the push button (32) and thus retains said push button in the top rest position, while in the operative position it releases said push button so that it my be moved downwardly into its bottom active position.

2. Electric household food processor as claimed in claim 1, characterized in that it comprises means for automatically fixing the catch (36) in its operative position, and that said catch includes a pin (50) for locking the foot (40) of the cover, said pin upon movement of the cover towards the open position being brought into engagement with said foot when the catch (36) is in the operative position.

3. Electric household food processor as claimed in claim 2, characterized in that the catch (36) is formed with a fork-like extension (42) which extends partially into the slot (44) of the projection and includes two tines (42 and 50) which are disposed serially in the path through which the foot (40) of the cover travels during the closing movement, wherein the forward tine (42) forms the actuating key for the catch and the rearward tine (50) forms the locking pin for the foot (40).

4. Electric household food processor as claimed in claim 2 or claim 3, characterized in that the means for automatically fixing the catch (36) includes a seat (56) adjacent the shoulder (52), which seat in the operative position is beneath the finger (54) and accommodates the same when the push button reaches its bottom active position.

5. Electric household food processor as claimed in any of the claims 2 to 4, characterized in that the means for automatically fixing the catch (36) furthermore includes a latch member (58) which is mounted within the projection (34) so as to be movable between a disengaged position in which it holds the catch (36) in the operative position and into which it is urged by a return element (60), and an engaged position into which it is brought against the action of the return element (60) and in which it releases the catch (36) and permits the same to be moved into the inactive position.

6. Electric household food processor as claimed in claim 5, characterized in that, when the latch (58) is held to be horizontally movable, said latch retains the catch (36) by means of a vertical abutment (62) which in the disengaged position is brought into engagement with an arm (64) of the catch, said arm being disposed in a vertical plane.

7. Electric household food processor as claimed in claim 5 or claim 6, characterized in that the push button (32) is under the action of an elastic return element (30) urging it into the rest position, and that the push button is adapted to be retained in its active position by means of the latch (58) in the engaged position thereof, so as to ensure permanent activation without further operation of the push button by the user.

8. Electric household food processor as claimed in claim 7, characterized in that the push button (32) is retained in its active position due to engagement of a prolongation (66) of the latch with a cam member (68) carried by the push button.

## Ansprüche

1. Elektrohaushaltsgerät zum Behandeln von Nahrungsmitteln mit einem Sockel (10), der eine von einem abnehmbaren Deckel (14) abgedeckte Arbeitsschüssel (12) trägt, einem im Sockel angeordneten Antriebsaggregat (18), dessen Abtriebswelle (24) in der Schüssel ein Arbeitswerkzeug (26) trägt, einem Schalter (28), der das Antriebsaggregat steuert und mittels eines Druckknopfes (32) angetrieben ist, der vom Benutzer betätigbar ist und zu diesem Zweck in einem der Schüssel benachbarten Vorsprung (34) des Sockels zwischen einer Ruhestellung und einer Einschaltstellung des Schalters (28) beweglich gehalten ist, sowie mit einem Sicherheitsriegel (36), der im Vorsprung (34) beweglich gehalten ist zwischen einer Haltstellung, in welcher er den Druckknopf (32) in Ruhestellung hält und in welche er durch eine Rückstellvorrichtung (38) gedrückt wird, und einer Betriebsstellung, in welcher er den Druckknopf (32) freigibt und in welche er gegen die Wirkung der Rückstellvorrichtung durch einen horizontal verlaufenden Fuß (40) gebracht wird, der mit dem Deckel (14) fest verbunden ist und der, wenn der Deckel in seine Schließstellung gebracht wird, durch einen in der Seitenwand des Vorsprungs (34) ausgebildeten Schlitz (44) in Eingriff mit einer Betätigungstaste (42) kommt, dadurch gekennzeichnet, daß der Deckel (14) vom Typ mit Drehverschluß, beispielsweise von der Art Bajonettvorrichtung, und der Druckknopf (32) im Vorsprung (34) zwischen seiner Ruhestellung und seiner Einschaltstellung senkrecht verschiebbar gehalten ist, daß der Riegel (36) um eine waagerechte Achse (46), die im wesentlichen in einer zum Deckel (14) radialen Ebene liegt, schwenkbar gehalten ist und eine Schulter (52) aufweist, die sich für die Haltstellung dieses Riegels unter einem mit dem Druckknopf (32) fest verbundenen herabreichenden Finger (54) befindet und so diesen Druckknopf in der oberen Ruhestellung hält, während sie in der Betriebsstellung diesen Druckknopf freigibt, damit er in seine untere Einschaltstellung herabbewegt werden kann.

2. Elektrohaushaltsgerät nach Anspruch 1, dadurch gekennzeichnet, daß das Gerät eine Vorrichtung zur automatischen Feststellung des Riegels (36) in seiner Betriebsstellung aufweist, daß dieser Riegel einen Zapfen (50) zum Einsperren des Fußes (40) des Deckels aufweist, der bei einer Bewegung des Deckels in Richtung auf Öffnen in Eingriff mit diesem Fuß kommt, wenn sich der Riegel (36) in der Betriebsstellung befindet.

3. Elektrohaushaltsgerät nach Anspruch 2, dadurch gekennzeichnet, daß der Riegel (36) eine gabelförmige Verlängerung (42) aufweist, die teilweise in den Schlitz (44) des Vorsprungs hineinragt und die zwei Zinken (42 und 50) aufweist, die der eine hinter dem anderen in der vom Fuß (40) des Deckels bei der Schließbewegung durchlaufenen Wegstrecke angeordnet sind, wobei der vordere Zinken (42) die Betätigungstaste des Riegels und der hintere Zinken (50) den Einsperrzapfen des Fußes (40) bildet.

4. Elektrohaushaltsgerät nach Anspruch 2 oder Anspruch 3, dadurch gekennzeichnet, daß die Vorrichtung zur automatischen Feststellung des Riegels (36) einen der Schulter (52) benachbarten Sitz (56) aufweist, der sich in der Betriebsstellung unter dem Finger (54) befindet und diesen Finger aufnimmt, wenn der Druckknopf in seine untere Einschaltstellung gelangt.

5. Elektrohaushaltsgerät nach einem der Ansprüche 2 bis 4, dadurch gekennzeichnet, daß die Vorrichtung zur automatischen Feststellung des Riegels (36) außerdem eine Klinke (58) aufweist, die im Vorsprung (34) beweglich gehalten ist zwischen einer Ausrückstellung, in der sie den Riegel (36) in der Betriebsstellung hält und in welche sie durch ein Rückstellelement (60) gedrückt wird, und einer Einrückstellung, in welche sie gegen die Wirkung des Rückstellelements (60) gebracht werden kann und in welcher sie den Riegel (36) freigibt und ihm ermöglicht, in seine Haltstellung zu gelangen.

6. Elektrohaushaltsgerät nach Anspruch 5, dadurch gekennzeichnet, daß bei waagerecht verschiebbar gehaltener Klinke (58) diese Klinke den Riegel (36) mittels eines senkrechten Anschlags (62) hält, der in der Ausrückstellung in Eingriff mit einem in einer senkrechten Ebene angeordneten Flügel (64) des Riegels kommt.

7. Elektrohaushaltsgerät nach Anspruch 5 oder Anspruch 6, dadurch gekennzeichnet, daß der Druckknopf (32) unter der Wirkung einer elastischen Rückstellvorrichtung (30) steht, die ihn in seine Ruhestellung drückt, und der Druckknopf durch die in ihre Einrückstellung gebrachte Klinke (58) in seiner Einschaltstellung gehalten werden kann, um eine dauernde Einschaltung ohne weitere Einwirkung des Benutzers auf den Druckknopf zu gewährleisten.

8. Elektrohaushaltsgerät nach Anspruch 7, dadurch gekennzeichnet, daß der Druckknopf (32) durch Hängenbleiben eines Fortsatzes (66) der Klinke an einem vom Druckknopf getragenen Nocken (68) in seiner Einschaltstellung gehalten ist.

Fig 1

0 025 972

16

III

40

F

III

14

Fig 2

16

Fig 3

14

40

0 025 972

Fig 7

0 025 972